# EUROPEAN PATENT APPLICATION

(11) **EP 4 505 881 A1**
(43) Date of publication of application: **12.02.2025**
(21) Application number: 23779092.8
(22) Date of filing: 24.02.2023
(51) Int. Cl.: A23L 33/10, A23L 5/00, A23L 29/00, A23L 33/15, A23L 33/16, G06Q 50/04

(54) **METHOD FOR PRODUCING NUTRIENT-ADDED FOOD AND METHOD FOR PROVIDING NUTRIENT-ADDED FOOD**

(30) Priority: 31.03.2022 JP 2022059002
(71) Applicant: NISSIN FOODS HOLDINGS CO., LTD., Yodogawa-ku Osaka-shi, Osaka 532-8524 (JP)
(72) Inventor: ANDO, Noritaka, Osaka-shi Osaka 532-8524 (JP); FUJIMOTO, Toshiyuki, Osaka-shi Osaka 532-8524 (JP); KANEMOTO, Yoshifumi, Osaka-shi Osaka 532-8524 (JP); OGAWA, Fumiyasu, Osaka-shi Osaka 532-8524 (JP)
(74) Representative: Mewburn Ellis LLP
(86) International application number: PCT/JP2023/006652
(87) International publication number: WO 2023/189062

(57) **Abstract**

An object of the present invention is to conveniently provide a customer with a plurality of diets each having one meal amount on a menu as nutrition-added food that satisfies a specific nutrient reference. Nutrition-added food that satisfies a specific nutrient reference designed on the basis of public nutrient reference intakes can be conveniently prepared, even for a plurality of diets each having one meal amount on a menu, by adding nutrient additives divided into at least three groups: a group including at least one or more types of vitamins having an upper limit of intake in the public nutrient reference intakes, a group including at least one or more types of minerals having an upper limit of intake in the public nutrient reference intakes, and a group including at least one or more types of vitamins or/and minerals having no upper limit of intake in the public nutrient reference intakes to at least one or more types of single items constituting a diet having one meal amount.

## Description

### TECHNICAL FIELD

The present invention relates to a method for producing nutrition-added food and a method for providing nutrition-added food.

### BACKGROUND ART

Along with the extension of the average life expectancy, it is now said to be important to extend "healthy life expectancy" which is a period of time spent without restrictions on daily life due to health troubles. Major factors that reduce the healthy life expectancy are related to lifestyle and include factors such as excessive alcohol intake, voracity, insufficient exercise, sleep deprivation, smoking habit, and stress. Disordered lifestyle reportedly increases the risk of obesity or life-style related diseases. Also, aging or insufficient exercise reportedly increases the risk of locomotive syndrome which increases the risk of future need of care. The concept of "metabolic domino" has been proposed and states that "life-style related diseases" typified by hypertension, hyperlipidemia, and diabetes mellitus are related to diseases such as three leading causes of death in Japanese, i.e., cancer, heart disease, and stroke, and dementia and date back to lifestyle itself as the most significant source so that these diseases progress as one domino falls after another. Thus, the most important prevention of the diseases described above is everyday lifestyle, i.e., change of dietary habit, exercise habit, and smoking habit. As for the dietary habit among them, each country discloses nutrient reference intakes as a guideline and recommends consuming nutritionally balanced diets based on the reference.

As mentioned above, interest in health maintenance or healthcare has been growing significantly in recent years, and there have been disclosed, for example, techniques related to healthcare based on personal data, techniques capable of consuming healthy and balanced diets, and techniques related to nutrient adjusted food products and nutritional supplementary food products.

For example, the invention described in Patent Literature 1 is a technique related to a system for calculating, displaying, correcting, and using an individualized nutritional health score, and discloses a system for determining influence on nutritional health of an individual by determining whether a nutrient content of an edible falls within a range customized for the individual.

The invention described in Patent Literature 2 is a technique related to a menu providing apparatus, a menu providing method, and a menu providing system, and discloses a technique capable of providing a general customer with a menu similar to that provided by a cooking expert on the basis of expertise in consideration given not only to a nutritional component value but to an item other than the nutritional component value (e.g., cooking procedures or a large number of materials used, food combination, or seasoning) taken into consideration by the general customer for everyday or each menu.

The invention described in Patent Literature 3 is a technique related to a menu proposing system and discloses a menu proposing system that can properly tell a nutritionally balanced submenu to be eaten together with user's own menu of choice.

The invention described in Patent Literature 4 is a technique related to a nutritionally balanced food product or drink product and discloses a prepackaged food product or drink product comprising macronutrients in the forms of protein, carbohydrate, and fat, wherein each complete serving of the product has the same relative proportions of nutritional reference values (NRV) for each macronutrient and wherein a content ratio of a fiber in a serving of the product provides a proportion of the NRV that is at least 5% greater than the percentage of the NRV provided by the fat, the protein, or the carbohydrate in the serving of the product.

The invention described in Patent Literature 5 is a technique related to an oral nutrient adjusted food product that enables all nutrients necessary for humans, irrespective of age or gender, to be orally consumed readily and continuously, and discloses a nutrient adjusted food product for oral consumption, comprising at least 2 to 75% of carbohydrate, 10% or more of protein, and 15 to 75% of lipid in an energy ratio, wherein when an estimated energy requirement shown in Dietary Reference Intakes for Japanese issued by the Ministry of Health, Labour and Welfare of Japan is consumed, intakes of vitamins and minerals shown in the Dietary Reference Intakes for Japanese issued by the Ministry of Health, Labour and Welfare of Japan reach amounts equal to or more than necessary amounts and equal to or less than upper-limit amounts

The invention described in Patent Literature 6 is a technique related to complete nutritious food and a providing system thereof and discloses a technique that eliminates the need of adjusting nutrients according to each category of age, gender, and physical activity level and allows for eating of complete nutritious food that satisfies Dietary Reference Intakes only by adjusting the amount (calories) of a food product.

The invention described in Patent Literature 7 is a technique related to a nutritional supplementary food product and describes a dry type nutritional supplementary food product that can confer nutrition by addition during eating of an existing food product.

As mentioned above, many techniques are disclosed, such as a managing systems for improving dietary habit, food products with balanced nutrients per meal, and nutritious supplements for completing nutrients. However, no method for efficiently and conveniently providing a customer with a plurality of diets on a menu as nutrition-added food that satisfies a specific nutrient reference has been disclosed yet.

### CITATION LIST

### PATENT LITERATURE

Patent Literature 1: Japanese Patent No. 6633625
Patent Literature 2: Japanese Patent Laid-Open No. 2019-1530006
Patent Literature 3: Japanese Patent No. 6961901
Patent Literature 4: Japanese Translation of PCT International Application Publication No. 2015-509736
Patent Literature 5: Japanese Patent Laid-Open No. 2019-140952
Patent Literature 6: International Publication No. WO 2021/193658
Patent Literature 7: Japanese Patent No. 4727650

### SUMMARY OF INVENTION

### TECHNICAL PROBLEM

An object of the present invention is to conveniently provide a customer with a plurality of diets each having one meal amount on a menu as nutrition-added food that satisfies a specific nutrient reference.

### SOLUTION TO PROBLEM

The inventors have invented complete nutritious food that satisfies nutrient reference intakes only by adjusting the amount (calories) of a food product as described in Patent Literature 6, and a providing system thereof. However, the operation of calculating a deficient nutrient for each diet having one meal amount selected by a customer and compensating for the deficient nutrient is too complicated in providing the customer with a plurality of diets each having one meal amount on a menu as complete nutritious food. Hence, the inventors have conducted diligent studies on a method for conveniently preparing complete nutritious food that satisfies nutrient reference intakes by the same method even for a plurality of diets each having one meal amount contained in a menu, and consequently found the present invention.

Specifically, the present invention provides a method for producing nutrition-added food, comprising adding nutrient additives consisting of at least three groups: a group including at least one or more types of vitamins having an upper limit of intake in public nutrient reference intakes, a group including at least one or more types of minerals having an upper limit of intake in public nutrient reference intakes, and a group including at least one or more types of vitamins or/and minerals having no upper limit of intake in public nutrient reference intakes to at least one or more types of single items constituting a diet having one meal amount, and thereby preparing nutrition-added food that satisfies a specific nutrient reference designed on the basis of the public nutrient reference intakes.

The vitamins having an upper limit of intake according to the present invention are preferably vitamin A, vitamin D, vitamin E, niacin, vitamin B6, and folic acid.

The minerals having an upper limit of intake according to the present invention are preferably calcium, iron, zinc, copper, manganese, phosphorus, iodine, selenium, chromium, and molybdenum.

The vitamins or/and the minerals having no upper limit of intake according to the present invention are preferably vitamin B1, vitamin B2, vitamin B12, vitamin C, vitamin K, pantothenic acid, biotin, potassium, and magnesium.

The method for producing nutrition-added food according to the present invention provides nutrition-added food that satisfies a specific nutrient reference.

The method for providing nutrition-added food according to the present invention includes a method for providing nutrition-added food in order to provide a customer with a plurality of diets each having one meal amount on a menu as nutrition-added food that satisfies a specific nutrient reference designed on the basis of public nutrient reference intakes, the method comprising: a deficiency calculation step of calculating a nutrient content of a basic configuration of the nutrition-added food on the basis of nutrient data on each single item constituting a diet having one meal amount selected from the menu, and calculating an amount of a nutrient that falls short of a lower-limit value of the specific nutrient reference; a nutrient additive addition amount calculation step of calculating addition amounts of nutrient additives consisting of at least three groups: a group including at least one or more types of vitamins having an upper limit of intake in the public nutrient reference intakes, a group including at least one or more types of minerals having an upper limit of intake in the public nutrient reference intakes, and a group including at least one or more types of vitamins or/and minerals having no upper limit of intake in the public nutrient reference intakes, the nutrient additives being added to the diet having one meal amount selected from the menu so as to compensate for the nutrient deficiency calculated in the deficiency calculation step and so as not to exceed an upper-limit value of the specific nutrient reference; and a nutrition-added food production step of preparing the nutrition-added food by adding the nutrient additives during or after production of at least one or more types of single items constituting the diet having one meal amount selected from the menu on the basis of the addition amounts calculated in the nutrient additive addition amount calculation step, wherein the nutrition-added food prepared in the nutrition-added food production step is provided directly or after being refrigerated or frozen to the customer.

The quantitative amounts (ratios) of the vitamins or/and the minerals contained in each of the groups of the nutrient additives according to the present invention are preferably optimum solutions or approximate solutions calculated by the optimization of a combination such that all of a plurality of diets each having one meal amount on a menu or as many diets as possible satisfy the specific nutrient reference.

### ADVANTAGEOUS EFFECTS OF INVENTION

The present invention can conveniently provide a customer with a plurality of diets each having one meal amount on a menu as nutrition-added food that satisfies a specific nutrient reference.

### DESCRIPTION OF EMBODIMENTS

Hereinafter, the present invention will be described in detail. However, the present invention is not limited by the following description.

### 1. Nutrition-added food

The nutrition-added food according to the present invention refers to the whole diet having one meal amount. Examples thereof include combinations of single items (e.g., staple food, main dish, side dish, soup, drink, and dessert) such as set menu and lunch box, and single items such as rice bowl dish and noodles serving as a diet having one meal amount in themselves. Specific examples thereof include stir-fried liver and garlic chives set menu (including rice, stir-fried liver and garlic chives, Japanese pickles, miso soup as single items), twice cooked pork lunch box (including rice, twice cooked pork, Chinese steamed dumplings, sausage, pasta, pickled daikon radish as single items), wheat noodles topped with tempura (only a single item), rice bowl dish topped with simmered chicken and egg (only a single item), and ramen (only a single item). As a matter of course, a diet having one meal amount that can be provided as a single item may be prepared into a diet having one meal amount as a set (e.g., ramen set menu (including ramen, half-portion fried rice, Jiao-zi, and chicken soup)) together with other single items. Although a customer may select and determine the contents themselves of each diet having one meal amount on a single item basis, it is basically preferred to set the diet having one meal amount by a meal provider on a timely basis. A method for producing each single item abides by an ordinary method, and each single item can be individually prepared

The nutrition-added food according to the present invention satisfies a specific nutrient reference designed on the basis of public nutrient reference intakes. Examples of the public nutrient reference intakes include "Dietary Reference Intakes for Japanese (2020 edition)" issued by the Ministry the Ministry of Health, Labour and Welfare of Japan. Other examples of the nutrient reference intakes include public nutrient reference intakes disclosed in public organizations or published papers, such as "Dietary Reference Intakes (DRIs)", Food and Nutrition Board of the Institute of Medicine in USA, "Dietary Reference Values for nutrients", European Food Safety Authority, 2017 in Europe, "Dietary Reference Intakes for Chinese", Chinese Nutrition Society, 2013 in China, "Dietary Reference Intakes for Koreans", Ministry of Health and Welfare and The Korean Nutrition Spciety, 2015 in Korea, "Dietary Guidelines for Indians", National Institute of Nutrition, India, 2011 in India, and "Nutritional Requirements during Spaceflight and on Earth", Japanese journal of aerospace and environmental medicine, Vol. 45, No. 3, 75-97, 2008 for astronauts. These public nutrient reference intakes disclosed in public organizations or published papers disclose energy requirements based on each category such as gender or physical activity and the amounts of nutrients such as carbohydrate, protein, lipid, and dietary fiber and additionally disclose reference intakes such as lower-limit amounts (estimated requirements), recommended dietary allowances, adequate intakes, tentative dietary goals for preventing life-style related diseases, and upper-limit amounts (tolerable upper intake levels) of vitamins, minerals, saturated fatty acids, unsaturated fatty acids (e.g., w3 and w6), and the like.

The specific nutrient reference can be a nutrient reference uniquely set on the basis of these public nutrient reference intakes so as to be equal to or more than a lower-limit value (estimated requirement), if described therein, and to be equal to or less than an upper-limit value (tolerable upper intake level), if described therein. For example, a recommended dietary allowance, an adequate intake, or a tentative dietary goal for preventing life-style related diseases may be used as a lower-limit value of the nutrient reference, or in Japan, - 20% to +80%, -20% to +50%, or -20% to +20% of a recommended dietary allowance, an adequate intake, or a tentative dietary goal for preventing life-style related diseases may be used as the nutrient reference in accordance with nutrition labeling standards. For such a specific nutrient reference, see techniques described in Patent Literatures 5 and 6. These public nutrient reference intakes disclosed in public organizations or published papers are renewed every several years. It is therefore preferred to accordingly adjust the reference so as to be compatible with the renewed public nutrient reference intakes.

In the nutrition-added food according to the present invention, the amount of energy and the nutrient references of carbohydrate, protein, lipid, dietary fiber, saturated fatty acid, and unsaturated fatty acid (e.g., w3 and w6) can be adjusted so as to satisfy the specific nutrient reference depending on the amount or ingredients of a single item constituting the diet having one meal amount as a basic configuration of the nutrition-added food. A diet having one meal amount adjusted so as to satisfy the amount of energy and the references of carbohydrate, protein, lipid, dietary fiber, saturated fatty acid, and unsaturated fatty acid (e.g., w3 and w6) can be used as a basic configuration of the nutrition-added food. If these references are not included in the specific nutrient reference of the nutrition-added food, the basic configuration of the nutrition-added food can be set without particular adjustment. In particular, it is reportedly important for carbohydrate, protein, and lipid to adjust a content balance (PFC balance). In the case of adjusting their balance, it is also preferred to make adjustment so as to satisfy the specific balance depending on the amount or ingredients of a single item constituting the diet having one meal amount.

As for the nutrient references of the vitamins and the minerals in the nutrition-added food according to the present invention, nutrition-added food that satisfies the specific nutrient reference is prepared by adding the nutrient additives to the basic configuration of the nutrition-added food.

### 2. Nutrient additives

The nutrient additives according to the present invention consist of at least three groups: a group including at least one or more types of vitamins having an upper limit of intake, a group including at least one or more types of minerals having an upper limit of intake, and a group including at least one or more types of vitamins or/and minerals having no upper limit of intake.

The nutrients to be added are put together to thereby decrease the number of times of weighing or adding the nutrients. However, in the case of a plurality of diets each having one meal amount on a menu, if the nutrients to be added are put together into one group of nutrient additives, nutrients having an upper limit of nutrient intake must need attention paid to the upper-limit values in each meal. Thus, nutrition-added food that satisfies the specific nutrient reference is difficult to prepare. The nutrients to be added are divided into at least three groups: a group including at least one or more types of vitamins having an upper limit of intake, a group including at least one or more types of minerals having an upper limit of intake, and a group including at least one or more types of vitamins or/and minerals having no upper limit of intake. More diets each having one meal amount on a menu than those in the case of putting nutrients together into one group can thereby be prepared as nutrition-added food that satisfies the specific nutrient reference. Such dividing into three groups can decrease the addition amounts of the nutrient additives and eliminates the need of adding nutrients more than necessary.

The reason for being divided into the group including vitamins having an upper limit of intake and the group including minerals having an upper limit of intake is that the vitamins are prevented from being attenuated during preservation because many minerals act on vitamins during preservation Another advantage is that vitamins or minerals whose addition amount must be of concern can be managed in a concentrated manner by putting together vitamins or minerals having an upper limit of intake.

The reason for being divided into the group of vitamins or/and minerals having no upper limit is that the addition amounts of nutrients need no particular attention because of the absence of the upper limit of nutrient intake as long as the addition amounts exceed the targeted lower-limit values; if vitamins are attenuated, the addition amounts can be increased in advance so as to compensate for the attenuation; and a plurality of nutrients, if added, can be put together to thereby decrease the number of times of adding or weighing the nutrients.

Each group of the nutrient additives does not have to be one group. For example, the group including vitamins having an upper limit of intake may be further divided into two or three subgroups. As each of the three groups is further divided into two or three subgroups, nutrition-added food that more finely satisfies the specific nutrient reference may be produced. However, the number of nutrient additives to be added is increased and is therefore not preferred. Even if the nutrient additives of each group are further divided, three or less subgroups are preferred. Six or less subgroups of the nutrient additives are preferred as a whole.

The vitamins included in the nutrient additives of the group including vitamins having an upper limit of intake according to the present invention are vitamins whose upper limit of intake is designated in nutrient reference intakes disclosed in public organizations or published papers, and can be selected according to each nutrient reference intake. Examples of the vitamins based on the "Dietary Reference Intakes for Japanese (2020 edition)" issued by the Ministry of Health, Labour and Welfare of Japan include vitamin A, vitamin D, vitamin E, niacin, vitamin B6, and folic acid. At least one or more of these vitamins may be included therein. These vitamins are not particularly limited as long as the vitamins can be used for food or for medicaments.

For some vitamins, although the upper limit of intake is not designated in the public nutrient reference intakes, the upper limit of an addition amount is designated in another law or reference such as the food hygiene law. Such vitamins whose upper limit is designated in another law or reference are also included in the minerals having an upper limit of intake in the broad sense.

The minerals included in the nutrient additives of the group including minerals having an upper limit of intake according to the present invention are minerals whose upper limit of intake is designated in nutrient reference intakes disclosed in public organizations or published papers, and can be selected according to each nutrient reference intake. Examples of the minerals included in the nutrient additives of the group including minerals having an upper limit of intake and based on the "Dietary Reference Intakes for Japanese (2020 edition)" issued by the Ministry of Health, Labour and Welfare of Japan include iron, calcium, zinc, copper, manganese, phosphorus, iodine, selenium, chromium, and molybdenum. At least one or more of these minerals may be included therein. These minerals are not particularly limited as long as the minerals can be used for food or for medicaments. The minerals may be inorganic salts or organic acid salts or may be contained in microbes.

For some minerals, although the upper limit of intake is not designated in the public nutrient reference intakes, the upper limit of an addition amount is designated in another law or reference such as the food hygiene law. Such minerals whose upper limit is designated in another law or reference are also included in the minerals having an upper limit of intake in the broad sense.

The vitamins and the minerals included in the nutrient additives of the group including vitamins or/and minerals having no upper limit of intake according to the present invention are vitamins and minerals whose upper limit of intake is not designated in nutrient reference intakes disclosed in public organizations or published papers, and can be selected according to each nutrient reference intake. Examples of the vitamins and the minerals included in the nutrient additives of the group including vitamins or/and minerals having no upper limit of intake and based on the "Dietary Reference Intakes for Japanese (2020 edition)" issued by the Ministry of Health, Labour and Welfare of Japan include vitamin B1, vitamin B2, vitamin B12, vitamin C, vitamin K, pantothenic acid, biotin, potassium, and magnesium. At least one or more of these vitamins or minerals may be included therein. These minerals are not particularly limited as long as the minerals can be used for food or for medicaments.

In the case of dividing the group including vitamins having an upper limit of intake or the group including minerals having an upper limit of intake into two or more subgroups, one of the subgroups can be mixed with the nutrient additives of the group including vitamins or/and minerals having no upper limit of intake. The resulting nutrient additives, albeit including the minerals or the vitamins having an upper limit of intake, are regarded as the nutrient additives of the group including vitamins or/and minerals having no upper limit of intake.

When the nutrient additives of each group include a plurality of nutrients, the quantitative amounts (ratios) of the vitamins or/and the minerals within the nutrient additives of each group can be determined by calculating the amount of a nutrient that falls short of the specific nutrient reference from the contents of nutrients in the basic configurations of a plurality of nutrition-added foods to be provided on a menu. In a specific method, on the basis of an average value, a maximum value, or the like of a deficient nutrient among the basic configurations of a plurality of nutrition-added foods to be provided on a menu, the content ratios of nutrients in materials added as nutrients are taken into consideration and set as base values of quantitative amounts within the nutrient additives of each group. The quantitative amount of each vitamin or mineral is changed up and down, and the number of matches of nutrition-added foods that fall within the specific nutrient reference without exceeding an upper-limit value is thereby tested when a nutrient additive is added in order to compensate the most deficient one from the specific nutrient reference of vitamins or minerals included in the basic configuration of each nutrition-added food. Optimum solutions or approximate solutions can be calculated by the optimization of a combination to thereby determine the quantitative amounts

The optimum solutions or the approximate solutions of the quantitative amounts of vitamins or minerals within the nutrient additives can be calculated using a program. For example, an approach of "genetic algorithm" can be adopted as the program. For the calculation, the respective optimum solutions and approximate solutions of the nutrient additives of each group may be determined by the program. Alternatively, nutrients included in the nutrient additives of each group are put together into one group, and its optimum solution or approximate solution may be calculated, followed by dividing into three groups. When the number of nutrition-added foods to be provided on a menu is as small as approximately several tens of diets, the optimum solutions or the approximate solutions often become values close to the base values calculated on the basis of an average value of each deficient nutrient. Thus, the base values calculated on the basis of an average value may be used as quantitative amounts

Even if the quantitative amounts of vitamins or minerals in the nutrient additives of each group are determined using the calculated optimum solutions or approximate solutions, an increased number of diets each having one meal amount to be provided as nutrition-added food makes it more difficult to provide all the diets as nutrition-added food that falls within the specific nutrient reference. In this case, the basic configuration of the nutrition-added food is changed, for example, by the addition or deletion of a single item included in the basic configuration or the adjustment of its quantitative amount or by the addition or deletion of an ingredient in the single item or the adjustment of its quantitative amount. Finally, nutrition-added food that satisfies the specific nutrient reference can thereby be prepared. Once the basic configuration is changed, nutrition-added food that satisfies the specific nutrient reference can be prepared by adding the nutrient additives of each group.

If only a specific nutrient is of concern, as mentioned above, the nutrient additives of the same group can be divided into two or more subgroups to thereby increase the number of diets compatible with the nutrient reference and decrease the number of adjustments of the basic configuration of the nutrition-added food, though increasing the number of times of weighing or adding the nutrient additives.

After the quantitative amounts of vitamins or minerals within the nutrient additives of each group are determined, materials containing the vitamins or the minerals are formulated according to the quantitative amounts, optionally with an excipient (e.g., starch and silicon dioxide), an antioxidant, other fat or oil materials, and the like to prepare nutrient additives of each group. The nutrient additives of each group may be, for example, a mixed powder of powder materials containing the vitamins or the minerals for use in the nutrient additives of each group, or may be granules obtained by granulation thereof. Alternatively, the nutrient additives may be a liquid in which materials containing the vitamins or the minerals for use in the nutrient additives of each group are dissolved in water or fat or oil, or may be tablets obtained by compressing powder materials containing the vitamins or the minerals for use in the nutrient additives of each group. Unlike these nutrient additives, materials containing the vitamins or the minerals for use in the nutrient additives of each group may be kneaded into an edible material such as meats, wheat flour, starch, a protein material, a thickener, or a gelling agent. The nutrient additives of each group are preferably a powder or a liquid in light of solubility or dispersibility. The nutrient additive of each group are desirably consumed as a lump having influence on neither texture nor taste to some extent because the vitamins or the minerals influence taste. Thus, a granular form or a form kneaded into an edible material is preferred. Particularly, in the case of using a form kneaded into an edible material, the balance of carbohydrate, protein, and lipid (PFC balance) of the edible material itself is adjusted so that the PFC balance of the nutrition-added food is not disturbed by the addition of the nutrient additives.

### 3. Production of nutrition-added food

Usually, nutrition-added food that satisfies a specific reference as to vitamins and minerals can be prepared by calculating a vitamin or a mineral that falls short of the specific nutrient reference from the basic configuration of the nutrition-added food for each diet having one meal amount, and adding each nutrient only in an amount that compensates for the deficiency. However, the operation of adding nutrients one by one for each nutrition-added food selected by a customer is very complicated with increase in the number of diets to be provided as nutrition-added food on a menu.

Accordingly, in the present invention, nutrition-added food can be conveniently produced, as mentioned above, by dividing the nutrient additives according to the present invention into at least three groups: a group including vitamins having an upper limit of intake, a group including minerals having an upper limit of intake, and a group including vitamins or/and minerals having no upper limit of intake, and adding the nutrient additives to any one or more single items in the basic configuration of the nutrition-added food as a diet having one meal amount.

As for the single item to which the nutrient additives according to the present invention are added, the nutrient additives may basically be added to any single item and are preferably added, typically, to main dish in order to mask unusual taste such as the acrid taste of vitamins or minerals in consideration of a weight or heavy seasoning. In the absence of main dish, the nutrient additives are preferably added to staple food. As for the time of addition of the nutrient additives, the nutrient additives may be added during production of a single item constituting the nutrition-added food or may be added after production of the single item. Alternatively, the nutrient additives may be added after serving as a diet having one meal amount. The production of the single item constituting the nutrition-added food according to the present invention is not particularly limited as long as the single item can be produced using ingredients or a cooking method known in the art.

When a plurality of single items constitute the nutrition-added food, the nutrient additives of each group may be added to separate single items. It is basically preferred to add all the nutrient additives of each group to one single item or to add the nutrient additives of each group to a plurality of single items such that all the nutrient additives are contained in each of the single items.

Subsequently, nutrients are calculated from the basic configuration of the nutrition-added food selected from the menu. The amount of a vitamin or a mineral that falls short of the specific nutrient reference is calculated on the basis of the data. The addition amounts of the nutrient additives of each group are calculated such that no nutrient falls short of the specific nutrient reference. The nutrient additives of each group are added to the basic configuration of the nutrition-added food. When the nutrient additives consist of three groups: a group including vitamins having an upper limit of intake, a group including minerals having an upper limit of intake, and a group including vitamins or/and minerals having no upper limit of intake, for example, for stir-fried liver and garlic chives set menu, 0.1 g of the nutrient additives in the group including vitamins having an upper limit of intake, 0.2 g of the nutrient additives in the group including minerals having an upper limit of intake, and 2.0 g of the nutrient additives in the group including vitamins or/and minerals having no upper limit of intake can be added to stir-fried liver and garlic chives (single item). For twice cooked pork lunch box, 0.3 g of the nutrient additives in the group including vitamins having an upper limit of intake, 0.6 g of the nutrient additives in the group including minerals having an upper limit of intake, and 3.0 g of the nutrient additives in the group including vitamins or/and minerals having no upper limit of intake can be added to twice cooked pork (single item). Thus, according to the present invention, nutrition-added food that satisfies the specific nutrient reference can be easily prepared by merely adjusting the addition amounts of the nutrient additives of three groups and adding them, even if a plurality of nutrition-added foods are covered on a menu.

The produced nutrition-added food may be provided directly in a dining room or the like or may be sold as a lunch box, a refrigerated food product after being refrigerated, or frozen food after being frozen. In the case of a refrigerated food product or frozen food, the nutrition-added food may contain vitamins susceptible to attenuation due to microwave cooking. In such a case, the nutrient additives may be included therein as a separate attachment, and eaters themselves can prepare the nutrition-added food by adding the nutrient additives to a single item in the basic configuration of the nutrition-added food after microwave cooking.

Hereinafter, the present embodiment will be described in more detail with reference to Examples

### EXAMPLES

Ten types of diets shown in Table 1 below were provided on a menu of diets having one meal amount serving as nutrition-added food. Tables 1 to 5 show the basic configuration of each diet and nutrient data on each diet. The nutrients described in Table 2 were designed in advance so at to satisfy the nutrient reference values of Table 6 depending on the ingredient formulation or weight of staple food, main dish, side dish, soup in the diet described in Table 1.

**[Table 1]**

| | Meal name | Staple food | Main dish | Side dish | | | Soup |
|---|---|---|---|---|---|---|---|
| 1 | Tuna sandwich and minestrone set menu | Tuna sandwich | | | | | Minestrone with a lot of ingredients |
| 2 | Cod bouillabaisse set menu | Steamed glutinous rice with chestnuts | Cod bouillabaisse | Pork and vegetables with egg-drop sauce | Stir fried Rice noodles | | Consomme chicken soup |
| 3 | Beef braised in red wine set menu | Rice cooked with Hijiki seaweed and carrot | Beef braised in red wine | Steamed chicken with stir fried Komatsuna | Scrambled eggs | Curry-flavored potato salad | Consomme chicken soup |
| 4 | Grilled ginger pork set menu | Healthy rice blend | Grilled ginger pork | Stewed Chinese cabbage and fried tofu with sesame miso | | | |
| 5 | Deviled chicken set menu | Healthy rice blend | Deviled chicken | | | | Tomato minestrone |
| 6 | Sauteed swordfish with curry cream sauce set menu | Healthy rice blend | Sauteed swordfish with curry cream sauce | Rich marinated spinach and tomato | | | |
| 7 | Chinese style rice bowl dish with mixed vegetable and meat/seafood gravy set menu | Chinese style rice bowl dish with mixed vegetable and meat/seafood gravy | | Chinese style salad with ham and cucumber | | | Chinese style corn soup |
| 8 | Stamina rice bowl dish topped with pork with garlic soy sauce set menu | Stamina rice bowl dish topped with pork with garlic soy sauce | | Cabbage marinated with salted kelp | | | Miso soup with Komatsuna and tofu |
| 9 | Ginger sauteed pork with kidney bean set menu | Healthy rice blend | Ginger sauteed pork with kidney bean | Tomato pickles | | | Soy milk soup with broccoli |
| 10 | Sauteed cod with ratatouille sauce set menu | Healthy rice blend | Sauteed cod with ratatouille sauce | Komatsuna and tuna marinated with mustard and soy sauce | Broccoli and olive salad | | |

**[Table 2]**

| | Meal name | Energy | Protein | Lipid | Saturated fatty acid | Carbohydrate | Total dietary fiber | n-6 Polyvalent unsaturated fatty acid | n-3 Polyvalent unsaturated fatty acid |
|---|---|---|---|---|---|---|---|---|---|
| | | kcal | g | g | g | g | g | g | g |
| 1 | Tuna sandwich and minestrone set menu | 441.7 | 19.2 | 13.6 | 3.0 | 62.4 | 10.2 | 4.04 | 1.07 |
| 2 | Cod bouillabaisse set menu | 583.9 | 23.6 | 16.9 | 4.5 | 83.8 | 10.3 | 4.03 | 0.91 |
| 3 | Beef braised in red wine set menu | 594.0 | 23.8 | 17.9 | 4.1 | 84.2 | 12.1 | 3.94 | 1.02 |
| 4 | Grilled ginger pork set menu | 485.4 | 23.1 | 14.8 | 3.4 | 64.1 | 8.4 | 3.48 | 1.05 |
| 5 | Deviled chicken set menu | 470.1 | 22.9 | 14.3 | 3.3 | 61.5 | 8.3 | 3.99 | 0.96 |
| 6 | Sauteed swordfish with curry cream sauce set menu | 491.5 | 23.5 | 15.9 | 3.6 | 65.5 | 9.0 | 3.92 | 1.31 |
| 7 | Chinese style rice bowl dish with mixed vegetable and meat/seafood gravy set menu | 468.2 | 22.1 | 13.0 | 3.1 | 66.9 | 9.0 | 3.31 | 0.64 |
| 8 | Stamina rice bowl dish topped with pork with garlic soy sauce set menu | 462.8 | 23.0 | 13.8 | 3.3 | 63.6 | 9.7 | 3.83 | 0.72 |
| 9 | Ginger sauteed pork with kidney bean set menu | 471.1 | 22.9 | 15.1 | 3.2 | 62.4 | 9.1 | 4.44 | 0.80 |
| 10 | Sauteed cod with ratatouille sauce set menu | 463.6 | 23.0 | 15.2 | 1.9 | 60.1 | 9.4 | 5.23 | 1.41 |

**[Table 3]**

| | Meal name | Vitamin A (retinol) | Vitamin A (retinol equivalent) | Vitamin D | Vitamin E | Niacin | Niacin equivalent | Vitamin B6 | Folic acid |
|---|---|---|---|---|---|---|---|---|---|
| | | µg | µg | µg | mg | mg | mg | mg | µg |
| 1 | Tuna sandwich and minestrone set menu | 2 | 231 | 0.4 | 3.58 | 6.21 | 10.1 | 0.56 | 85.0 |
| 2 | Cod bouillabaisse set menu | 42 | 309 | 1.6 | 3.80 | 6.74 | 11.8 | 0.55 | 186.6 |
| 3 | Beef braised in red wine set menu | 27 | 556 | 0.6 | 3.59 | 10.69 | 16.7 | 0.89 | 185.5 |
| 4 | Grilled ginger pork set menu | 3 | 204 | 0.1 | 2.05 | 6.88 | 12.6 | 0.59 | 135.8 |
| 5 | Deviled chicken set menu | 17 | 218 | 0.2 | 3.91 | 7.72 | 13.1 | 0.83 | 109.3 |
| 6 | Sauteed swordfish with curry cream sauce set menu | 55 | 449 | 6.3 | 7.00 | 9.32 | 14.9 | 0.61 | 131.0 |
| 7 | Chinese style rice bowl dish with mixed vegetable and meat/seafood gravy set menu | 30 | 227 | 1.0 | 2.21 | 6.97 | 12.1 | 0.56 | 104.6 |
| 8 | Stamina rice bowl dish topped with pork with garlic soy sauce set menu | 3 | 270 | 0.3 | 2.73 | 6.87 | 12.2 | 0.79 | 177.5 |
| 9 | Ginger sauteed pork with kidney bean set menu | 3 | 102 | 0.1 | 5.00 | 5.75 | 11.1 | 0.68 | 169.9 |
| 10 | Sauteed cod with ratatouille sauce set menu | 10 | 370 | 0.7 | 5.95 | 5.45 | 10.5 | 0.54 | 159.5 |

**[Table 4]**

| | Meal name | Iron | Zinc | Copper | Manganese | Iodine | Selenium | Chromium | Molybdenum | Calcium | Phosphorus |
|---|---|---|---|---|---|---|---|---|---|---|---|
| | | mg | mg | mg | mg | µg | µg | µg | µg | mg | mg |
| 1 | Tuna sandwich and minestrone set menu | 2.5 | 1.8 | 0.42 | 0.91 | 53 | 19 | 4 | 21 | 77 | 334 |
| 2 | Cod bouillabaisse set menu | 2.5 | 2.1 | 0.41 | 1.10 | 1805 | 29 | 3 | 26 | 259 | 357 |
| 3 | Beef braised in red wine set menu | 4.0 | 3.4 | 0.39 | 1.05 | 3708 | 18 | 4 | 44 | 403 | 356 |
| 4 | Grilled ginger pork set menu | 3.3 | 2.8 | 0.36 | 1.21 | 1 | 3 | 2 | 40 | 376 | 328 |
| 5 | Deviled chicken set menu | 2.0 | 2.9 | 0.30 | 0.85 | 6 | 18 | 3 | 31 | 241 | 324 |
| 6 | Sauteed swordfish with curry cream sauce set menu | 3.3 | 2.3 | 0.43 | 1.03 | 12 | 45 | 4 | 36 | 302 | 370 |
| 7 | Chinese style rice bowl dish with mixed vegetable and meat/seafood gravy set menu | 2.3 | 3.6 | 0.35 | 0.94 | 3 | 7 | 2 | 25 | 243 | 329 |
| 8 | Stamina rice bowl dish topped with pork with garlic soy sauce set menu | 3.3 | 3.7 | 0.36 | 0.95 | 3 | 3 | 3 | 40 | 308 | 322 |
| 9 | Ginger sauteed pork with kidney bean set menu | 3.5 | 3.7 | 0.45 | 1.20 | 0 | 3 | 1 | 29 | 279 | 325 |
| 10 | Sauteed cod with ratatouille sauce set menu | 2.7 | 1.7 | 0.33 | 0.80 | 112 | 20 | 1 | 26 | 291 | 314 |

**[Table 5]**

| | Meal name | Potassium | Magnesium | Vitamin K | Vitamin B1 | Vitamin B2 | Vitamin B12 | Pantothenic acid | Biotin | Vitamin C |
|---|---|---|---|---|---|---|---|---|---|---|
| | | mg | mg | µg | mg | mg | µg | mg | µg | mg |
| 1 | Tuna sandwich and minestrone set menu | 1085 | 78 | 25 | 0.51 | 0.26 | 0.6 | 1.34 | 5.5 | 48 |
| 2 | Cod bouillabaisse set menu | 999 | 76 | 104 | 0.41 | 0.35 | 2.1 | 1.87 | 9.5 | 60 |
| 3 | Beef braised in red wine set menu | 1346 | 91 | 198 | 0.43 | 0.37 | 1.2 | 2.49 | 12.2 | 75 |
| 4 | Grilled ginger pork set menu | 733 | 93 | 161 | 0.81 | 0.26 | 0.2 | 1.23 | 4.7 | 45 |
| 5 | Deviled chicken set menu | 969 | 69 | 84 | 0.40 | 0.30 | 0.3 | 1.75 | 7.1 | 79 |
| 6 | Sauteed swordfish with curry cream sauce set menu | 912 | 96 | 146 | 0.34 | 0.26 | 1.4 | 1.13 | 9.5 | 18 |
| 7 | Chinese style rice bowl dish with mixed vegetable and meat/seafood gravy set menu | 806 | 67 | 91 | 0.72 | 0.37 | 0.5 | 2.16 | 7.5 | 18 |
| 8 | Stamina rice bowl dish topped with pork with garlic soy sauce set menu | 989 | 82 | 181 | 0.82 | 0.38 | 0.3 | 1.98 | 7.7 | 81 |
| 9 | Ginger sauteed pork with kidney bean set menu | 1004 | 83 | 128 | 0.79 | 0.33 | 0.3 | 2.07 | 7.6 | 50 |
| 10 | Sauteed cod with ratatouille sauce set menu | 928 | 71 | 266 | 0.31 | 0.22 | 2.2 | 1.26 | 8.1 | 54 |

Upper-limit values and lower-limit values of nutrients per 100 kcal of a diet were set as a specific nutrient reference for an expected intake of 1650 kcal or more per day on the basis of "Dietary Reference Intakes for Japanese (2020 edition)", issued by the Ministry of Health, Labour and Welfare of Japan. For vitamin A, a retinol activity equivalent was set as the lower-limit value, and retinol was set as the upper-limit value. For niacin as well, a niacin equivalent was set as the lower-limit value, and niacin was set as the upper-limit value. For iodine, the amount of iodine from nutrient additives was set to the upper-limit value, and diet-derived iodine was excluded. For folic acid, the total amount of folic acid from a food product and nutrient additives was set as the upper-limit value. Tables 6 to 9 below show the nutrient references according to Examples of the present invention.

**[Table 6]**

| | Meal name | Protein | Lipid | Saturated fatty acid | Carbohydrate | Total dietary fiber | n-6 Polyvalent unsaturated fatty acid | n-3 Polyvalent unsaturated fatty acid |
|---|---|---|---|---|---|---|---|---|
| | | g | g | g | g | g | g | g |
| Reference | Expected nutrient reference of 1650 kcal Lower-limit value per 100 kcal | 3.9 | 2.2 | | 12.5 | 1.3 | 0.7 | 0.1 |
| Reference | Expected nutrient reference of 1650 kcal Upper-limit value of intake per 100 kcal | 5.0 | 3.3 | 0.8 | 16.3 | - | - | - |

**[Table 7]**

| | Meal name | Vitamin A (retinol) | Vitamin A (retinol equivalent) | Vitamin D | Vitamin E | Niacin | Niacin equivalent | Vitamin B6 | Folic acid |
|---|---|---|---|---|---|---|---|---|---|
| | | µg | µg | µg | mg | mg | mg | mg | µg |
| Reference | Expected nutrient reference of 1650 kcal Lower-limit value per 100 kcal | - | 54.5 | 0.52 | 0.42 | - | 0.91 | 0.085 | 14.55 |
| Reference | Expected nutrient reference of 1650 kcal Upper-limit value of intake per 100 kcal | 88.5 | - | 3.28 | 27.87 | 2.62 | - | 1.803 | - |
| Reference | Expected nutrient reference of 1650 kcal Upper-limit value of addition per 100 kcal | - | - | - | - | - | - | - | 29.51 |

**[Table 8]**

| | Meal name | Iron | Zinc | Copper | Manganese | Iodine | Selenium | Chromium | Molybdenum | Calcium | Phosphorus |
|---|---|---|---|---|---|---|---|---|---|---|---|
| | | mg | mg | mg | mg | µg | µg | µg | µg | mg | mg |
| Reference | Expected nutrient reference of 1650 kcal Lower-limit value per 100 kcal | 0.64 | 0.67 | 0.055 | 0.242 | 7.88 | 1.82 | 0.61 | 1.82 | 48.5 | 60.6 |
| Reference | Expected nutrient reference of 1650 kcal Upper-limit value of intake per 100 kcal | 1.64 | 1.31 | 0.230 | 0.361 | - | 14.75 | 16.39 | 19.67 | 82.0 | 98.4 |
| Reference | Expected nutrient reference of 1650 kcal Upper-limit value of addition per 100 kcal | - | - | - | - | 98.36 | - | - | - | - | - |

**[Table 9]**

| | Meal name | Potassium | Magnesium | Vitamin K | Vitamin B1 | Vitamin B2 | Vitamin B12 | Pantothenic acid | Biotin | Vitamin C |
|---|---|---|---|---|---|---|---|---|---|---|
| | | mg | mg | µg | mg | mg | µg | mg | µg | mg |
| Reference | Expected nutrient reference of 1650 kcal Lower-limit value per 100 kcal | 151.5 | 22.4 | 9.1 | 0.085 | 0.097 | 0.145 | 0.364 | 3.03 | 6.1 |
| Reference | Expected nutrient reference of 1650 kcal Upper-limit value of intake per 100 kcal | - | - | - | - | - | - | - | - | - |
| Reference | Expected nutrient reference of 1650 kcal Upper-limit value of addition per 100 kcal | - | - | - | - | - | - | - | - | - |

Tables 10 to 12 below show the lower-limit amount of each nutrient in each diet calculated from the amount of energy on the basis of the nutrient references of Tables 7 to 9 according to Examples of the present invention. Tables 13 and 14 below show the upper-limit amount of each nutrient in each diet as to nutrients having the upper limit of intake.

**[Table 10]**

| | Meal name | Vitamin A (retinol) | Vitamin A (retinol equivalent) | Vitamin D | Vitamin E | Niacin | Niacin equivalent | Vitamin B6 | Folic acid |
|---|---|---|---|---|---|---|---|---|---|
| | | µg | µg | µg | mg | mg | mg | mg | µg |
| Reference | Nutrient intake reference of 1650 kcal (Lower-limit value per 100 kcal) | | 54.5 | 0.52 | 0.42 | | 0.91 | 0.085 | 14.55 |
| 1 | Tuna sandwich and minestrone set menu | | 240.9 | 2.3 | 1.9 | | 4.0 | 0.4 | 64.3 |
| 2 | Cod bouillabaisse set menu | | 318.5 | 3.0 | 2.5 | | 5.3 | 0.5 | 84.9 |
| 3 | Beef braised in red wine set menu | | 324.0 | 3.1 | 2.5 | | 5.4 | 0.5 | 86.4 |
| 4 | Grilled ginger pork set menu | | 264.8 | 2.5 | 2.1 | | 4.4 | 0.4 | 70.6 |
| 5 | Deviled chicken set menu | | 256.4 | 2.4 | 2.0 | | 4.3 | 0.4 | 68.4 |
| 6 | Sauteed swordfish with curry cream sauce set menu | | 268.1 | 2.5 | 2.1 | | 4.5 | 0.4 | 71.5 |
| 7 | Chinese style rice bowl dish with mixed vegetable and meat/seafood gravy set menu | | 255.4 | 2.4 | 2.0 | | 4.3 | 0.4 | 68.1 |
| 8 | Stamina rice bowl dish topped with pork with garlic soy sauce set menu | | 252.5 | 2.4 | 2.0 | | 4.2 | 0.4 | 67.3 |
| 9 | Ginger sauteed pork with kidney bean set menu | | 257.0 | 2.4 | 2.0 | | 4.3 | 0.4 | 68.5 |
| 10 | Sauteed cod with ratatouille sauce set menu | | 252.9 | 2.4 | 2.0 | | 4.2 | 0.4 | 67.4 |

**[Table 11]**

| | Meal name | Iron | Zinc | Copper | Manganese | Iodine | Selenium | Chromium | Molybdenum | Calcium | Phosphorus |
|---|---|---|---|---|---|---|---|---|---|---|---|
| | | mg | mg | mg | mg | µg | µg | µg | µg | mg | mg |
| Reference | Nutrient intake reference of 1650 kcal (Lower-limit value per 100 kcal) | 0.64 | 0.67 | 0.055 | 0.242 | 7.88 | 1.82 | 0.61 | 1.82 | 48.5 | 60.6 |
| 1 | Tuna sandwich and minestrone set menu | 2.81 | 2.94 | 0.241 | 1.07 | 34.80 | 8.03 | 2.68 | 8.03 | 214.2 | 267.7 |
| 2 | Cod bouillabaisse set menu | 3.72 | 3.89 | 0.318 | 1.42 | 46.01 | 10.62 | 3.54 | 10.62 | 283.1 | 353.9 |
| 3 | Beef braised in red wine set menu | 3.78 | 3.96 | 0.324 | 1.44 | 46.80 | 10.80 | 3.60 | 10.80 | 288.0 | 360.0 |
| 4 | Grilled ginger pork set menu | 3.09 | 3.24 | 0.265 | 1.18 | 38.25 | 8.83 | 2.94 | 8.83 | 235.4 | 294.2 |
| 5 | Deviled chicken set menu | 2.99 | 3.13 | 0.256 | 1.14 | 37.04 | 8.55 | 2.85 | 8.55 | 227.9 | 284.9 |
| 6 | Sauteed swordfish with curry cream sauce set menu | 3.13 | 3.28 | 0.268 | 1.19 | 38.73 | 8.94 | 2.98 | 8.94 | 238.3 | 297.9 |
| 7 | Chinese style rice bowl dish with mixed vegetable and meat/seafood gravy set menu | 2.98 | 3.12 | 0.255 | 1.14 | 36.89 | 8.51 | 2.84 | 8.51 | 227.0 | 283.8 |
| 8 | Stamina rice bowl dish topped with pork with garlic soy sauce set menu | 2.95 | 3.09 | 0.252 | 1.12 | 36.47 | 8.42 | 2.81 | 8.42 | 224.4 | 280.5 |
| 9 | Ginger sauteed pork with kidney bean set menu | 3.00 | 3.14 | 0.257 | 1.14 | 37.12 | 8.57 | 2.86 | 8.57 | 228.4 | 285.5 |
| 10 | Sauteed cod with ratatouille sauce set menu | 2.95 | 3.09 | 0.253 | 1.12 | 36.53 | 8.43 | 2.81 | 8.43 | 224.8 | 281.0 |

**[Table 12]**

| | Meal name | Potassium | Magnesium | Vitamin K | Vitamin B1 | Vitamin B2 | Vitamin B12 | Pantothenic acid | Biotin | Vitamin C |
|---|---|---|---|---|---|---|---|---|---|---|
| | | mg | mg | µg | mg | mg | µg | mg | µg | mg |
| Reference | Nutrient intake reference of 1650 kcal (Lower-limit value per 100 kcal) | 151.5 | 22.4 | 9.1 | 0.085 | 0.097 | 0.145 | 0.364 | 3.03 | 6.1 |
| 1 | Tuna sandwich and minestrone set menu | 669.3 | 99.1 | 40.2 | 0.4 | 0.4 | 0.6 | 1.6 | 13.4 | 26.8 |
| 2 | Cod bouillabaisse set menu | 884.7 | 130.9 | 53.1 | 0.5 | 0.6 | 0.8 | 2.1 | 17.7 | 35.4 |
| 3 | Beef braised in red wine set menu | 899.9 | 133.2 | 54.0 | 0.5 | 0.6 | 0.9 | 2.2 | 18.0 | 36.0 |
| 4 | Grilled ginger pork set menu | 735.5 | 108.9 | 44.1 | 0.4 | 0.5 | 0.7 | 1.8 | 14.7 | 29.4 |
| 5 | Deviled chicken set menu | 712.3 | 105.4 | 42.7 | 0.4 | 0.5 | 0.7 | 1.7 | 14.2 | 28.5 |
| 6 | Sauteed swordfish with curry cream sauce set menu | 744.7 | 110.2 | 44.7 | 0.4 | 0.5 | 0.7 | 1.8 | 14.9 | 29.8 |
| 7 | Chinese style rice bowl dish with mixed vegetable and meat/seafood gravy set menu | 709.4 | 105.0 | 42.6 | 0.4 | 0.5 | 0.7 | 1.7 | 14.2 | 28.4 |
| 8 | Stamina rice bowl dish topped with pork with garlic soy sauce set menu | 701.3 | 103.8 | 42.1 | 0.4 | 0.4 | 0.7 | 1.7 | 14.0 | 28.1 |
| 9 | Ginger sauteed pork with kidney bean set menu | 713.9 | 105.7 | 42.8 | 0.4 | 0.5 | 0.7 | 1.7 | 14.3 | 28.6 |
| 10 | Sauteed cod with ratatouille sauce set menu | 702.5 | 104.0 | 42.1 | 0.4 | 0.4 | 0.7 | 1.7 | 14.0 | 28.1 |

**[Table 13]**

| | Meal name | Vitamin A (retinol) | Vitamin A (retinol equivalent) | Vitamin D | Vitamin E | Niacin | Niacin equivalent | Vitamin B6 | Folic acid |
|---|---|---|---|---|---|---|---|---|---|
| | | µg | µg | µg | mg | mg | mg | mg | µg |
| Reference | Expected nutrient reference of 1650 kcal Upper-limit value of intake per 100 kcal | 88.5 | - | 3.28 | 27.87 | 2.62 | - | 1.803 | - |
| Reference | Expected nutrient reference of 1650 kcal Upper-limit value of addition per 100 kcal | - | - | - | - | - | - | - | 29.51 |
| 1 | Tuna sandwich and minestrone set menu | 391.0 | - | 14.5 | 123.1 | 11.6 | - | 8.0 | 130.3 |
| 2 | Cod bouillabaisse set menu | 516.9 | - | 19.1 | 162.7 | 15.3 | - | 10.5 | 172.3 |
| 3 | Beef braised in red wine set menu | 525.8 | - | 19.5 | 165.5 | 15.6 | - | 10.7 | 175.3 |
| 4 | Grilled ginger pork set menu | 429.7 | - | 15.9 | 135.3 | 12.7 | - | 8.8 | 143.2 |
| 5 | Deviled chicken set menu | 416.2 | - | 15.4 | 131.0 | 12.3 | - | 8.5 | 138.7 |
| 6 | Sauteed swordfish with curry cream sauce set menu | 435.1 | - | 16.1 | 137.0 | 12.9 | - | 8.9 | 145.0 |
| 7 | Chinese style rice bowl dish with mixed vegetable and meat/seafood gravy set menu | 414.5 | - | 15.4 | 130.5 | 12.3 | - | 8.4 | 138.2 |
| 8 | Stamina rice bowl dish topped with pork with garlic soy sauce set menu | 409.7 | - | 15.2 | 129.0 | 12.1 | - | 8.3 | 136.6 |
| 9 | Ginger sauteed pork with kidney bean set menu | 417.1 | - | 15.4 | 131.3 | 12.4 | - | 8.5 | 139.0 |
| 10 | Sauteed cod with ratatouille sauce set menu | 410.4 | - | 15.2 | 129.2 | 12.2 | - | 8.4 | 136.8 |

**[Table 14]**

| | Meal name | Iron | Zinc | Copper | Manganese | Iodine | Selenium | Chromium | Molybdenum | Calcium | Phosphorus |
|---|---|---|---|---|---|---|---|---|---|---|---|
| | | mg | mg | mg | mg | µg | µg | µg | µg | mg | mg |
| Reference | Expected nutrient reference of 1650 kcal Upper-limit value of intake per 100 kcal | 1.64 | 1.31 | 0.230 | 0.361 | - | 14.75 | 16.39 | 19.67 | 82.0 | 98.4 |
| Reference | Expected nutrient reference of 1650 kcal Upper-limit value of addition per 100 kcal | - | - | - | - | 98.3 6 | - | - | - | - | - |
| 1 | Tuna sandwich and minestrone set menu | 7.23 | 5.79 | 1.014 | 1.593 | 434.48 | 65.17 | 72.41 | 86.90 | 362.1 | 434.5 |
| 2 | Cod bouillabaisse set menu | 9.55 | 7.66 | 1.340 | 2.106 | 574.34 | 86.15 | 95.72 | 114.87 | 478.6 | 574.3 |
| 3 | Beef braised in red wine set menu | 9.72 | 7.79 | 1.363 | 2.142 | 584.21 | 87.63 | 97.37 | 116.84 | 486.8 | 584.2 |
| 4 | Grilled ginger pork set menu | 7.94 | 6.37 | 1.114 | 1.751 | 477.47 | 71.62 | 79.58 | 95.49 | 397.9 | 477.5 |
| 5 | Deviled chicken set menu | 7.69 | 6.17 | 1.079 | 1.696 | 462.42 | 69.36 | 77.07 | 92.48 | 385.3 | 462.4 |
| 6 | Sauteed swordfish with curry cream sauce set menu | 8.04 | 6.45 | 1.128 | 1.773 | 483.47 | 72.52 | 80.58 | 96.69 | 402.9 | 483.5 |
| 7 | Chinese style rice bowl dish with mixed vegetable and meat/seafood gravy set menu | 7.66 | 6.14 | 1.075 | 1.689 | 460.53 | 69.08 | 76.76 | 92.11 | 383.8 | 460.5 |
| 8 | Stamina rice bowl dish topped with pork with garlic soy sauce set menu | 7.57 | 6.07 | 1.062 | 1.669 | 455.25 | 68.29 | 75.88 | 91.05 | 379.4 | 455.3 |
| 9 | Ginger sauteed pork with kidney bean set menu | 7.71 | 6.18 | 1.081 | 1.699 | 463.43 | 69.51 | 77.24 | 92.69 | 386.2 | 463.4 |
| 10 | Sauteed cod with ratatouille sauce set menu | 7.59 | 6.08 | 1.064 | 1.672 | 456.03 | 68.41 | 76.01 | 91.21 | 380.0 | 456.0 |

The amounts of the nutrients in each diet of Tables 3 to 5 were compared with the lower-limit values of Tables 10 to 12, and the number of diets deficient in each nutrient and an average deficiency were calculated. The results are shown in Tables 15 to 17 below.

**[Table 15]**

| | Meal name | Vitamin A (retinol) | Vitamin A (retinol equivalent) | Vitamin D | Vitamin E | Niacin | Niacin equivalent | Vitamin B6 | Folic acid |
|---|---|---|---|---|---|---|---|---|---|
| | | µg | µg | µg | mg | mg | mg | mg | µg |
| 1 | Tuna sandwich and minestrone set menu | - | -10.4 | -1.85 | 1.71 | - | 6.09 | 0.181 | 20.77 |
| 2 | Cod bouillabaisse set menu | - | -9.7 | -1.38 | 1.32 | - | 6.49 | 0.006 | 101.68 |
| 3 | Beef braised in red wine set menu | - | 232.5 | -2.46 | 1.07 | - | 11.28 | 0.388 | 99.14 |
| 4 | Grilled ginger pork set menu | - | -61.0 | -2.44 | -0.01 | - | 8.14 | 0.178 | 65.24 |
| 5 | Deviled chicken set menu | - | -38.4 | -2.22 | 1.92 | - | 8.87 | 0.426 | 40.96 |
| 6 | Sauteed swordfish with curry cream sauce set menu | - | 180.6 | 3.78 | 4.91 | - | 10.44 | 0.192 | 59.48 |
| 7 | Chinese style rice bowl dish with mixed vegetable and meat/seafood gravy set menu | - | -28.7 | -1.38 | 0.22 | - | 7.89 | 0.167 | 36.49 |
| 8 | Stamina rice bowl dish topped with pork with garlic soy sauce set menu | - | 17.5 | -2.05 | 0.76 | - | 8.03 | 0.396 | 110.14 |
| 9 | Ginger sauteed pork with kidney bean set menu | - | -154.9 | -2.30 | 3.01 | - | 6.84 | 0.281 | 101.36 |
| 10 | Sauteed cod with ratatouille sauce set menu | - | 117.4 | -1.67 | 3.99 | - | 6.28 | 0.143 | 92.05 |
| Deficient number | | - | 6 | 9 | 1 | - | 0 | 0 | 0 |
| Average deficiency | | - | -50.5 | -1.97 | -0.01 | - | 0 | 0 | 0 |

**[Table 16]**

| | Meal name | Iron | Zinc | Copper | Manganese | Iodine | Selenium | Chromium | Molybdenum | Calcium | Phosphorus |
|---|---|---|---|---|---|---|---|---|---|---|---|
| | | mg | mg | mg | mg | µg | µg | µg | µg | mg | mg |
| 1 | Tuna sandwich and minestrone set menu | -0.26 | -1.11 | 0.175 | -0.160 | 18.38 | 10.98 | 0.88 | 13.06 | -136.9 | 66.3 |
| 2 | Cod bouillabaisse set menu | -1.26 | -1.75 | 0.087 | -0.313 | 1758.50 | 18.43 | -0.68 | 15.08 | -23.9 | 3.1 |
| 3 | Beef braised in red wine set menu | 0.17 | -0.53 | 0.064 | -0.391 | 3661.57 | 6.92 | 0.23 | 33.48 | 114.6 | -3.8 |
| 4 | Grilled ginger pork set menu | 0.21 | -0.44 | 0.099 | 0.029 | -37.39 | -5.57 | -1.12 | 31.37 | 140.5 | 33.9 |
| 5 | Deviled chicken set menu | -0.98 | -0.20 | 0.048 | -0.293 | -30.84 | 9.33 | -0.14 | 22.75 | 13.5 | 39.1 |
| 6 | Sauteed swordfish with curry cream sauce set menu | 0.17 | -0.97 | 0.158 | -0.160 | -26.40 | 36.18 | 0.73 | 27.26 | 63.5 | 72.2 |
| 7 | Chinese style rice bowl dish with mixed vegetable and meat/seafood gravy set menu | -0.72 | 0.50 | 0.090 | -0.198 | -33.54 | -1.64 | -0.85 | 16.90 | 16.1 | 45.0 |
| 8 | Stamina rice bowl dish topped with pork with garlic soy sauce set menu | 0.31 | 0.66 | 0.112 | -0.168 | -33.74 | -5.21 | 0.26 | 31.91 | 83.8 | 41.3 |
| 9 | Ginger sauteed pork with kidney bean set menu | 0.52 | 0.51 | 0.188 | 0.062 | -37.06 | -5.81 | -2.02 | 20.05 | 50.4 | 39.8 |
| 10 | Sauteed cod with ratatouille sauce set menu | -0.26 | -1.37 | 0.072 | -0.321 | 75.82 | 11.99 | -1.85 | 17.97 | 66.7 | 33.4 |
| Deficient number | | 5 | 7 | 0 | 8 | 6 | 4 | 6 | 0 | 2 | 1 |
| Average deficiency | | -0.70 | -0.91 | 0 | -0.251 | -33.16 | -4.56 | -1.11 | 0 | -80.4 | -3.8 |

**[Table 17]**

| | Meal name | Potassium | Magnesium | Vitamin K | Vitamin B1 | Vitamin B2 | Vitamin B12 | Pantothenic acid | Biotin | Vitamin C |
|---|---|---|---|---|---|---|---|---|---|---|
| | | mg | mg | µg | mg | mg | µg | mg | µg | mg |
| 1 | Tuna sandwich and minestrone set menu | 416.0 | -21.4 | -15.2 | 0.135 | -0.164 | -0.054 | -0.269 | -7.90 | 21.7 |
| 2 | Cod bouillabaisse set menu | 114.4 | -55.0 | 51.1 | -0.089 | -0.215 | 1.276 | -0.252 | -8.24 | 24.8 |
| 3 | Beef braised in red wine set menu | 445.7 | -42.1 | 143.5 | -0.071 | -0.205 | 0.365 | 0.335 | -5.82 | 39.1 |
| 4 | Grilled ginger pork set menu | -2.5 | -16.0 | 116.5 | 0.403 | -0.214 | -0.503 | -0.536 | -9.97 | 15.4 |
| 5 | Deviled chicken set menu | 257.0 | -35.9 | 41.2 | 0.000 | -0.159 | -0.345 | 0.041 | -7.10 | 50.4 |
| 6 | Sauteed swordfish with curry cream sauce set menu | 167.2 | -14.6 | 101.0 | -0.075 | -0.221 | 0.639 | -0.653 | -5.36 | -11.7 |
| 7 | Chinese style rice bowl dish with mixed vegetable and meat/seafood gravy set menu | 96.9 | -37.7 | 48.5 | 0.322 | -0.079 | -0.225 | 0.458 | -6.73 | -10.8 |
| 8 | Stamina rice bowl dish topped with pork with garlic soy sauce set menu | 287.7 | -22.1 | 139.4 | 0.423 | -0.070 | -0.369 | 0.301 | -6.32 | 53.3 |
| 9 | Ginger sauteed pork with kidney bean set menu | 289.9 | -22.8 | 85.6 | 0.386 | -0.130 | -0.426 | 0.352 | -6.63 | 21.6 |
| 10 | Sauteed cod with ratatouille sauce set menu | 225.2 | -33.1 | 223.6 | -0.080 | -0.225 | 1.558 | -0.423 | -5.91 | 26.1 |
| Deficient number | | 1 | 10 | 1 | 4 | 10 | 6 | 5 | 10 | 2 |
| Average deficiency | | -2.5 | -30.1 | -15.2 | -0.078 | -0.168 | -0.320 | -0.426 | -6.41 | -11.2 |

As shown in Tables 15 to 17, as a result of comparing the amounts of the nutrients contained in each diet shown in Tables 3 to 5 with the values of Tables 10 to 12 showing the lower-limit values in each diet having the nutrient references of Tables 7 to 9, it is evident that a nutrient deficiency varies among diets. The addition of deficient nutrients one by one to each diet requires labor and takes harder work with increase in the number of diets included in a menu. In addition, the risk of adding a wrong nutrient or a wrong amount thereof is increased.

For the ten diets described in the present Examples, niacin, vitamin B6, folic acid, copper, and molybdenum satisfy their references in all the diets and do not have to be added as nutrient additives. However, the number of nutrients that do not satisfy their references is increased with increase in the number of diets on a menu. Therefore, in the case of a large number of diets, all the nutrients are basically included in the nutrient additives.

Subsequently, on the basis of the calculated average values of deficient nutrients, the formulation of each material of a nutrient additive serving as a base (base formulation) was calculated from the content ratios of nutrients in materials to be added as nutrients. The quantitative amount of the material of each nutrient was changed up and down by a program using genetic algorithm on the basis of the base formulation. An optimum solution (approximate solution) was calculated as to the quantitative amount (single formulation) of the material of each nutrient in which the number of diets was maximized so as to satisfy the references of Tables 10 to 12 in the case of single formulation as the nutrient additives by compensating for the deficient nutrients and so as not to exceed an upper-limit values of Tables 13 and 14 (formulation 1). Table 18 below describes the formulation of nutrients when the formulation of the optimum solution (approximate solution) of the single formulation (formulation 1) was divided into three groups: vitamins having an upper limit in nutrient reference intakes (formulation 2), minerals having an upper limit in nutrient reference intakes (formulation 3), and vitamins or/and minerals having no upper limit in nutrient reference intakes (formulation 4), and the group of minerals having an upper limit further divided into two subgroups (formulation 5 and formulation 6).

**[Table 18]**

| Nutrient | Material | Content ratio | Average deficiency (g) | Base formulation (g) | 1 | 2 | 3 | 4 | 5 | 6 |
|---|---|---|---|---|---|---|---|---|---|---|
| | | | | | Single formulation | Vitamin Upper limit | Mineral Upper limit | No upper limit | Mineral Upper limit a | Mineral Upper limit b |
| Vitamin A (retinol) | Vitemin A oil | 0.06 | 0.000051 | 0.000842 | 0.000842 | 0.000842 | | | | |
| Vitamin D | Vitamin D3 oil | 0.0025 | 0.000002 | 0.000789 | 0.000789 | 0.000789 | | | | |
| Vitamin E | α-Tocopherol preparation | 0.513 | 0.000008 | 0.000016 | 0.000020 | 0.000020 | | | | |
| Niacin | Niacin preparation | 0.26 | 0 | | | | | | | |
| Vitamin B6 | Pyridoxin hydrochloride | 0.806 | 0 | | | | | | | |
| Folic acid | Folic acid | 1 | 0 | | | | | | | |
| Iron | Diiron pyrophosphate | 0.285 | 0.000698 | 0.002448 | 0.002450 | | 0.002450 | | 0.002450 | |
| Zinc | Zinc yeast | 0.1 | 0.000910 | 0.009101 | 0.009106 | | 0.009106 | | 0.009106 | |
| Copper | Same yeast | 0.05 | 0 | | | | | | | |
| Manganese | Manganese yeast | 0.05 | 0.000251 | 0.005012 | 0.004604 | | 0.004604 | | 0.004604 | |
| Iodine | Iodine yeast | 0.0035 | 0.000033 | 0.009474 | 0.009475 | | 0.009475 | | 0.009475 | |
| Selenium | Selenium yeast | 0.002 | 0.000005 | 0.002279 | 0.002280 | | 0.002280 | | 0.002280 | |
| Chromium | Chromium yeast | 0.002 | 0.000001 | 0.000555 | 0.000555 | | 0.000555 | | 0.000555 | |
| Molybdenum | Molybdenu m yeast | 0.002 | 0 | | | | | | | |
| Calcium | Calcium lactate | 0.129 | 0.080410 | 0.623335 | 0.062334 | | 0.062334 | | | 0.062334 |
| | (Calcium phosphate) | 0.39 | | | | | | | | |
| Phosphorus | Calcium phosphate | 0.201 | 0.003775 | 0.018782 | 0.018785 | | 0.018785 | | | 0.018785 |
| | (Diiron pyrophosphate) | 0.079 | | | | | | | | |
| Potassium | Potassium Chloride | 0.523 | 0.002489 | 0.004760 | 0.004761 | | | 0.004761 | | |
| Magnesium | Magnesium Oxide | 0.593 | 0.030090 | 0.050743 | 0.050743 | | | 0.050743 | | |
| Vitamin K | Vitamin K preparation | 0.01 | 0.000015 | 0.001521 | 0.001521 | | | 0.001521 | | |
| Vitamin B1 | Vitamin B1 preparation | 0.26 | 0.000078 | 0.000302 | 0.000304 | | | 0.000304 | | |
| Vitamin B2 | Vitamin B2 preparation | 0.1 | 0.000168 | 0.001681 | 0.001687 | | | 0.001687 | | |
| Vitamin B12 | Vitamin B12 powder preparation | 0.0011 | 0.000000 | 0.000291 | 0.000292 | | | 0.000292 | | |
| Pantothenic acid | Calcium pantothenate | 0.46 | 0.000426 | 0.000927 | 0.000928 | | | 0.000928 | | |
| Biotin | Biotin preparation | 0.0103 | 0.000006 | 0.000622 | 0.000680 | | | 0.00068 | | |
| Vitamin C | L-Ascorbic acid | 0.98 | 0.011248 | 0.011478 | 0.011478 | | | 0.011478 | | |
| Total | | | | | 0.183634 | 0.001651 | 0.109589 | 0.072394 | 0.02847 | 0.081119 |

In the present Examples, the optimum solution (approximate solution) of the formulation (single formulation) of a material in the nutrient additives was calculated by a program on the basis of the base formulation calculated from the average deficiency In the case of a small number of diets, the base formulation often does not largely differ from the single formulation. Hence, it is not necessarily required to calculate optimum solutions or approximate solutions by a program, and the base formulation calculated from the average deficiency may be used as the formulation (single formulation) of a material in the nutrient additives.

Subsequently, Table 19 shows the addition amount of each nutrient additive when each nutrient additive was added so as to satisfy its nutrient reference of Tables 10 to 12 as to the most deficient nutrient in each diet on the basis of the formulation of the nutrient additives described in Table 18.

**[Table 19]**

| | Meal name | 1 | 2 | 3 | 4 | 5 | 6 |
|---|---|---|---|---|---|---|---|
| | | Single formulation | Vitamin Upper limit | Mineral Upper limit | No upper limit | Mineral Upper limit a | Mineral Upper limit b |
| | | g | g | g | g | g | g |
| 1 | Tuna sandwich and minestrone set menu | 3.1446 | 0.0016 | 1.8831 | 0.0817 | 0.0361 | 1.3811 |
| 2 | Cod bouillabaisse set menu | 0.5494 | 0.0012 | 0.3290 | 0.1324 | 0.0566 | 0.2413 |
| 3 | Beef braised in red wine set menu | 0.3141 | 0.0021 | 0.1881 | 0.1013 | 0.0501 | 0.0811 |
| 4 | Grilled ginger pork set menu | 0.2900 | 0.0021 | 0.1352 | 0.1137 | 0.0360 | 0 |
| 5 | Deviled chicken set menu | 0.2589 | 0.0019 | 0.1550 | 0.0864 | 0.0413 | 0 |
| 6 | Sauteed swordfish with curry cream sauce set menu | 0.2826 | 0 | 0.1178 | 0.1107 | 0.0314 | 0 |
| 7 | Chinese style rice bowl dish with mixed vegetable and meat/seafood gravy set menu | 0.2313 | 0.0012 | 0.1146 | 0.0907 | 0.0305 | 0 |
| 8 | Stamina rice bowl dish topped with pork with garlic soy sauce set menu | 0.2128 | 0.0018 | 0.1264 | 0.0834 | 0.0337 | 0 |
| 9 | Ginger sauteed pork with kidney bean set menu | 0.5662 | 0.0052 | 0.2015 | 0.0961 | 0.0537 | 0 |
| 10 | Sauteed cod with ratatouille sauce set menu | 0.3082 | 0.0014 | 0.1846 | 0.0967 | 0.0492 | 0 |

Tables 20 to 28 show nutrient contents in each diet when each nutrient additive was added in the amount described in Table 19 to each diet. As for the addition of nutrient additives to each diet, in the presence of main dish, the nutrient additives were added during preparation of the main dish, and in the absence of main dish, the nutrient additives were added during preparation of staple food. Tables 20 to 22 show nutrient contents in each diet when formulation 1 (single formulation) was added as nutrient additives. Tables 23 to 25 show nutrient contents in each diet when three groups of formulation 2 (vitamin upper limit), formulation 3 (vitamin upper limit), and formulation 4 (no upper limit) were added as nutrient additives. Tables 26 to 28 show nutrient contents in each diet when four groups of formulation 2 (vitamin upper limit), formulation 4 (no upper limit), formulation 5 (mineral upper limit a), and formulation 6 (mineral upper limit b) were added as nutrient additives. Nutrients exceeding the upper limit are indicated by black background and white character.

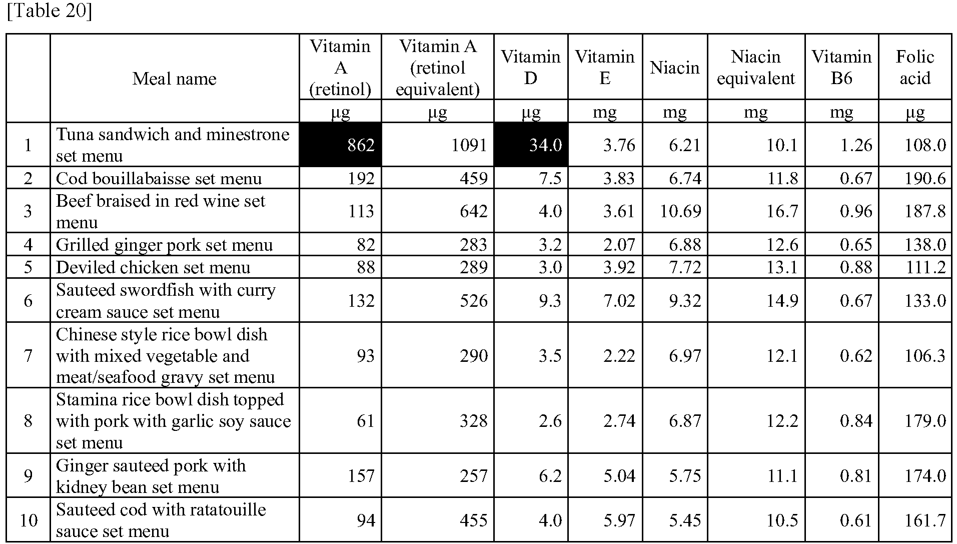

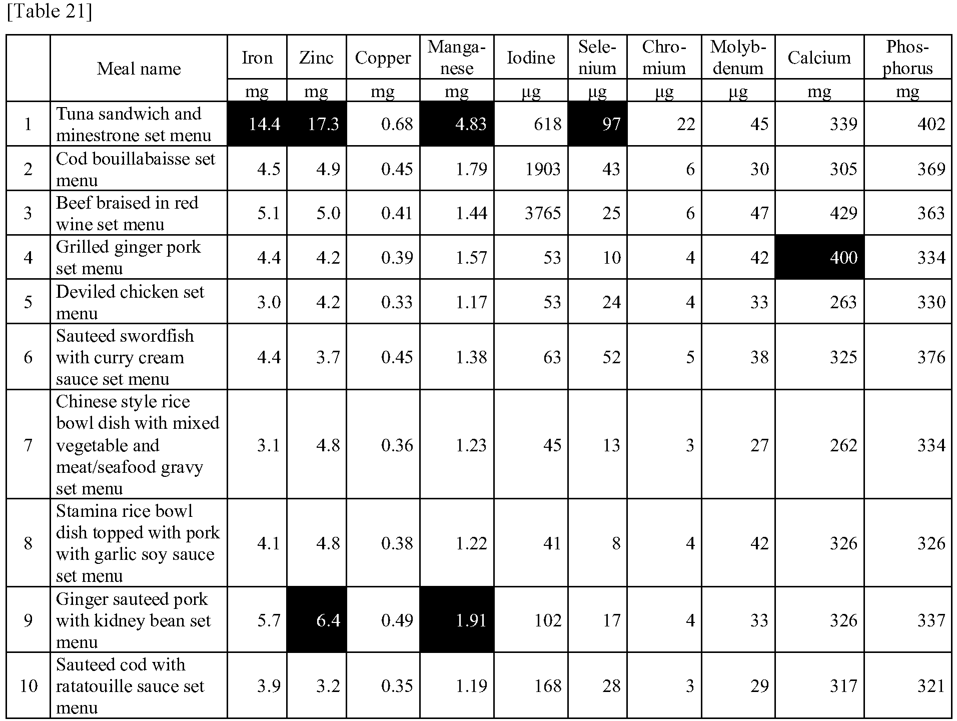

**[Table 22]**

| | Meal name | Potassium | Magnesium | Vitamin K | Vitamin B1 | Vitamin B2 | Vitamin B12 | Pantothenic acid | Biotin | Vitamin C |
|---|---|---|---|---|---|---|---|---|---|---|
| | | mg | mg | µg | mg | mg | µg | mg | µg | mg |
| 1 | Tuna sandwich and minestrone set menu | 1128 | 590 | 590 | 1.85 | 3.14 | 6.0 | 8.61 | 124.6 | 240 |
| 2 | Cod bouillabaisse set menu | 1007 | 165 | 165 | 0.64 | 0.85 | 3.1 | 3.14 | 30.3 | 94 |
| 3 | Beef braised in red wine set menu | 1350 | 142 | 142 | 0.57 | 0.66 | 1.8 | 3.22 | 24.1 | 94 |
| 4 | Grilled ginger pork set menu | 737 | 140 | 140 | 0.94 | 0.52 | 0.7 | 1.90 | 15.7 | 63 |
| 5 | Deviled chicken set menu | 973 | 112 | 112 | 0.51 | 0.53 | 0.8 | 2.35 | 17.0 | 95 |
| 6 | Sauteed swordfish with curry cream sauce set menu | 916 | 142 | 142 | 0.46 | 0.51 | 1.8 | 1.79 | 20.2 | 35 |
| 7 | Chinese style rice bowl dish with mixed vegetable and meat/seafood gravy set menu | 809 | 105 | 105 | 0.82 | 0.59 | 0.9 | 2.70 | 16.2 | 32 |
| 8 | Stamina rice bowl dish topped with pork with garlic soy sauce set menu | 992 | 116 | 116 | 0.91 | 0.57 | 0.7 | 2.48 | 15.8 | 94 |
| 9 | Ginger sauteed pork with kidney bean set menu | 1011 | 175 | 175 | 1.03 | 0.84 | 1.2 | 3.37 | 29.1 | 85 |
| 10 | Sauteed cod with ratatouille sauce set menu | 932 | 121 | 121 | 0.45 | 0.51 | 2.8 | 1.98 | 19.8 | 73 |

**[Table 23]**

| | Meal name | Vitamin A (retinol) | Vitamin A (retinol equivalent) | Vitamin D | Vitamin E | Niacin | Niacin equivalent | Vitamin B6 | Folic acid |
|---|---|---|---|---|---|---|---|---|---|
| | | µg | µg | µg | mg | mg | mg | mg | µg |
| 1 | Tuna sandwich and minestrone set menu | 49 | 278 | 2.3 | 3.59 | 6.21 | 10.1 | 0.59 | 86.3 |
| 2 | Cod bouillabaisse set menu | 77 | 344 | 3.0 | 3.80 | 6.74 | 11.8 | 0.58 | 187.6 |
| 3 | Beef braised in red wine set menu | 90 | 619 | 3.1 | 3.60 | 10.69 | 16.7 | 0.94 | 187.2 |
| 4 | Grilled ginger pork set menu | 65 | 266 | 2.5 | 2.06 | 6.88 | 12.6 | 0.64 | 137.5 |
| 5 | Deviled chicken set menu | 74 | 275 | 2.4 | 3.92 | 7.72 | 13.1 | 0.87 | 110.9 |
| 6 | Sauteed swordfish with curry cream sauce set menu | 55 | 449 | 6.3 | 7.00 | 9.32 | 14.9 | 0.61 | 131.0 |
| 7 | Chinese style rice bowl dish with mixed vegetable and meat/seafood gravy set menu | 65 | 262 | 2.4 | 2.21 | 6.97 | 12.1 | 0.59 | 105.5 |
| 8 | Stamina rice bowl dish topped with pork with garlic soy sauce set menu | 56 | 323 | 2.4 | 2.74 | 6.87 | 12.2 | 0.83 | 178.9 |
| 9 | Ginger sauteed pork with kidney bean set menu | 157 | 257 | 6.2 | 5.04 | 5.75 | 11.1 | 0.81 | 174.0 |
| 10 | Sauteed cod with ratatouille sauce set menu | 53 | 413 | 2.4 | 5.96 | 5.45 | 10.5 | 0.57 | 160.6 |

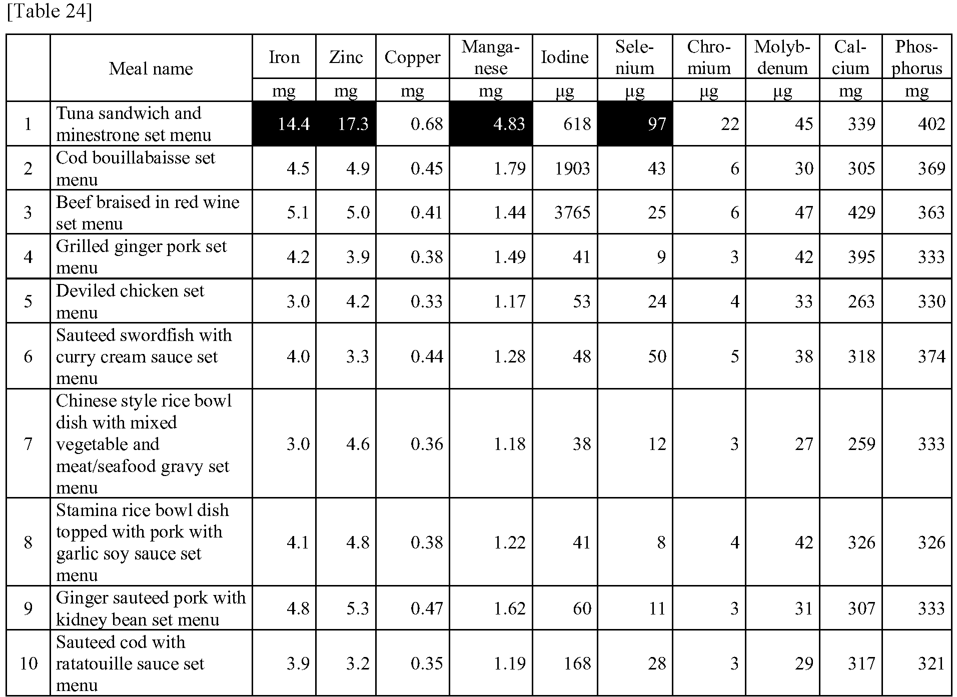

**[Table 25]**

| | Meal name | Potassium | Magnesium | Vitamin K | Vitamin B1 | Vitamin B2 | Vitamin B12 | Pantothenic acid | Biotin | Vitamin C |
|---|---|---|---|---|---|---|---|---|---|---|
| | | mg | mg | µg | mg | mg | µg | mg | µg | mg |
| 1 | Tuna sandwich and minestrone set menu | 1088 | 112 | 42 | 0.60 | 0.45 | 1.0 | 1.82 | 13.4 | 61 |
| 2 | Cod bouillabaisse set menu | 1004 | 131 | 132 | 0.55 | 0.66 | 2.7 | 2.65 | 22.3 | 81 |
| 3 | Beef braised in red wine set menu | 1349 | 133 | 219 | 0.54 | 0.61 | 1.7 | 3.09 | 22.0 | 91 |
| 4 | Grilled ginger pork set menu | 737 | 140 | 185 | 0.94 | 0.52 | 0.7 | 1.90 | 15.7 | 63 |
| 5 | Deviled chicken set menu | 972 | 105 | 102 | 0.49 | 0.50 | 0.7 | 2.26 | 15.5 | 92 |
| 6 | Sauteed swordfish with curry cream sauce set menu | 916 | 142 | 169 | 0.46 | 0.51 | 1.8 | 1.79 | 20.2 | 35 |
| 7 | Chinese style rice bowl dish with mixed vegetable and meat/seafood gravy set menu | 809 | 105 | 110 | 0.82 | 0.59 | 0.9 | 2.70 | 16.2 | 32 |
| 8 | Stamina rice bowl dish topped with pork with garlic soy sauce set menu | 992 | 116 | 199 | 0.91 | 0.57 | 0.7 | 2.48 | 15.8 | 94 |
| 9 | Ginger sauteed pork with kidney bean set menu | 1007 | 123 | 149 | 0.89 | 0.55 | 0.7 | 2.63 | 16.9 | 65 |
| 10 | Sauteed cod with ratatouille sauce set menu | 931 | 111 | 286 | 0.42 | 0.45 | 2.7 | 1.83 | 17.5 | 69 |

**[Table 26]**

| | Meal name | Vitamin A (retinol) | Vitamin A (retinol equivalent) | Vitamin D | Vitamin E | Niacin | Niacin equivalent | Vitamin B6 | Folic acid |
|---|---|---|---|---|---|---|---|---|---|
| | | µg | µg | µg | mg | mg | mg | mg | µg |
| 1 | Tuna sandwich and minestrone set menu | 49 | 278 | 2.3 | 3.59 | 6.21 | 10.1 | 0.59 | 86.3 |
| 2 | Cod bouillabaisse set menu | 77 | 344 | 3.0 | 3.80 | 6.74 | 11.8 | 0.58 | 187.6 |
| 3 | Beef braised in red wine set menu | 90 | 619 | 3.1 | 3.60 | 10.69 | 16.7 | 0.94 | 187.2 |
| 4 | Grilled ginger pork set menu | 65 | 266 | 2.5 | 2.06 | 6.88 | 12.6 | 0.64 | 137.5 |
| 5 | Deviled chicken set menu | 74 | 275 | 2.4 | 3.92 | 7.72 | 13.1 | 0.87 | 110.9 |
| 6 | Sauteed swordfish with curry cream sauce set menu | 55 | 449 | 6.3 | 7.00 | 9.32 | 14.9 | 0.61 | 131.0 |
| 7 | Chinese style rice bowl dish with mixed vegetable and meat/seafood gravy set menu | 65 | 262 | 2.4 | 2.21 | 6.97 | 12.1 | 0.59 | 105.5 |
| 8 | Stamina rice bowl dish topped with pork with garlic soy sauce set menu | 56 | 323 | 2.4 | 2.74 | 6.87 | 12.2 | 0.83 | 178.9 |
| 9 | Ginger sauteed pork with kidney bean set menu | 157 | 257 | 6.2 | 5.04 | 5.75 | 11.1 | 0.81 | 174.0 |
| 10 | Sauteed cod with ratatouille sauce set menu | 53 | 413 | 2.4 | 5.96 | 5.45 | 10.5 | 0.57 | 160.6 |

**[Table 27]**

| | Meal name | Iron | Zinc | Copper | Manganese | Iodine | Sele-n-ium | Chromium | Molybdenum | Calcium | Phosphorus |
|---|---|---|---|---|---|---|---|---|---|---|---|
| | | mg | mg | mg | mg | µg | µg | µg | µg | mg | mg |
| 1 | Tuna sandwich and minestrone set menu | 3.4 | 2.9 | 0.43 | 1.19 | 94 | 25 | 5 | 23 | 339 | 398 |
| 2 | Cod bouillabaisse set menu | 3.8 | 3.9 | 0.43 | 1.54 | 1868 | 38 | 5 | 28 | 305 | 369 |
| 3 | Beef braised in red wine set menu | 5.1 | 5.0 | 0.41 | 1.44 | 3765 | 25 | 6 | 47 | 418 | 360 |
| 4 | Grilled ginger pork set menu | 4.2 | 3.9 | 0.38 | 1.49 | 41 | 9 | 3 | 42 | 376 | 328 |
| 5 | Deviled chicken set menu | 3.0 | 4.2 | 0.33 | 1.17 | 53 | 24 | 4 | 33 | 241 | 324 |
| 6 | Sauteed swordfish with curry cream sauce set menu | 4.0 | 3.3 | 0.44 | 1.28 | 48 | 50 | 5 | 38 | 302 | 370 |
| 7 | Chinese style rice bowl dish with mixed vegetable and meat/seafood gravy set menu | 3.0 | 4.6 | 0.36 | 1.18 | 38 | 12 | 3 | 27 | 243 | 329 |
| 8 | Stamina rice bowl dish topped with pork with garlic soy sauce set menu | 4.1 | 4.8 | 0.38 | 1.22 | 41 | 8 | 4 | 42 | 308 | 322 |
| 9 | Ginger sauteed pork with kidney bean set menu | 4.8 | 5.3 | 0.47 | 1.62 | 60 | 11 | 3 | 31 | 279 | 326 |
| 10 | Sauteed cod with ratatouille sauce set menu | 3.9 | 3.2 | 0.35 | 1.19 | 168 | 28 | 3 | 29 | 291 | 315 |

**[Table 28]**

| | Meal name | Potassium | Magnesium | Vitamin K | Vitamin B1 | Vitamin B2 | Vitamin B12 | Pantothenic acid | Biotin | Vitamin C |
|---|---|---|---|---|---|---|---|---|---|---|
| | | mg | mg | µg | mg | mg | µg | mg | µg | mg |
| 1 | Tuna sandwich and minestrone set menu | 1088 | 112 | 42 | 0.60 | 0.45 | 1.0 | 1.82 | 13.4 | 61 |
| 2 | Cod bouillabaisse set menu | 1004 | 131 | 132 | 0.55 | 0.66 | 2.7 | 2.65 | 22.3 | 81 |
| 3 | Beef braised in red wine set menu | 1349 | 133 | 219 | 0.54 | 0.61 | 1.7 | 3.09 | 22.0 | 91 |
| 4 | Grilled ginger pork set menu | 737 | 140 | 185 | 0.94 | 0.52 | 0.7 | 1.90 | 15.7 | 63 |
| 5 | Deviled chicken set menu | 972 | 105 | 102 | 0.49 | 0.50 | 0.7 | 2.26 | 15.5 | 92 |
| 6 | Sauteed swordfish with curry cream sauce set menu | 916 | 142 | 169 | 0.46 | 0.51 | 1.8 | 1.79 | 20.2 | 35 |
| 7 | Chinese style rice bowl dish with mixed vegetable and meat/seafood gravy set menu | 809 | 105 | 110 | 0.82 | 0.59 | 0.9 | 2.70 | 16.2 | 32 |
| 8 | Stamina rice bowl dish topped with pork with garlic soy sauce set menu | 992 | 116 | 199 | 0.91 | 0.57 | 0.7 | 2.48 | 15.8 | 94 |
| 9 | Ginger sauteed pork with kidney bean set menu | 1007 | 123 | 149 | 0.89 | 0.55 | 0.7 | 2.63 | 16.9 | 65 |
| 10 | Sauteed cod with ratatouille sauce set menu | 931 | 111 | 286 | 0.42 | 0.45 | 2.7 | 1.83 | 17.5 | 69 |

As shown in Tables 20 to 22, when the nutrient additives were added as single formulation, seven out of ten diets were able to satisfy the nutrient references of Tables 7 to 9 (Tables 10 to 14), whereas the remaining three diets resulted in including nutrients exceeding their references

By contrast, as shown in Tables 23 to 25, as a result of adding nutrient additives divided into three groups: a group including vitamins having an upper limit of intake, a group including minerals having an upper limit of intake, and a group of vitamins or/and minerals having no upper limit of intake, nine out of ten diets were able to satisfy the nutrient references of Tables 7 to 9 (Tables 10 to 14). However, the remaining one diet resulted in including nutrients exceeding their references.

In Examples of the present invention, effects brought about by dividing into three groups are difficult to understand because the number of diets was as small as 10. However, as the number of diets is increased to 50 or 100 or more, it is preferred to add nutrient additives divided into three groups: a group including vitamins having an upper limit of intake, a group including minerals having an upper limit of intake, and a group including vitamins or/and minerals having no upper limit of intake because a larger number of diets satisfy the nutrient reference and the number of diets that require adjusting their basic configuration as mentioned later is decreased.

As shown in Table 24, diet No. 1 "tuna sandwich and minestrone" exceeded the references of iron, manganese, zinc, and selenium. In an adjustment method in the case of exceeding a nutrient reference, nutrition-added food that satisfies the reference can be prepared by adjusting the amount or ingredient of a single item in the basic configuration of the nutrition-added food. In this case, ingredients rich in iron, manganese, zinc, and selenium contained in the single item constituting the basic configuration of the nutrition-added food may be reduced or changed to other ingredients for adjustment. However, as shown in Table 4, diet No. 1 "tuna sandwich and minestrone" had a low content of calcium and required adding more nutrient additives in the group including minerals having an upper limit of intake for compensating for calcium. Therefore, the other minerals exceeded their references. Hence, an ingredient rich in calcium may be added to the single item in the basic configuration for adjustment. As the number of diets is increased to 50 or 100 or more, the diets have the difficulty in completely satisfying a reference even if three groups are added thereto. Therefore, nutrition-added food that satisfies the nutrient reference is prepared by finally adjusting the basic configuration of the nutrition-added food, as mentioned above, as to the specific nutrient reference that cannot be satisfied at any cost.

Calcium is added in the form of calcium phosphate from a material for adjusting phosphorus, in addition to calcium lactate, and phosphorus is added in the form of diiron pyrophosphate for adjusting iron, in addition to calcium phosphate. Therefore, as shown in the formulation 5 and the formulation 6 of Table 18, calcium lactate and calcium phosphate may be separated from the other minerals having an upper limit of intake and used as nutrient additives. As shown in Tables 26 to 28, all the ten diets produced were able to satisfy the specific nutrient reference by separating calcium lactate and calcium phosphate from the other minerals having an upper limit of intake. Nutrient additives including minerals having an upper limit of intake were divided as to calcium and phosphorus this time. Depending on the type of a diet, other minerals having an upper limit of intake or other vitamins having an upper limit of intake may be divided into two or more subgroups and added to thereby make adjustment so as to satisfy the nutrient reference. However, as the number of subgroups is increased, the number of diets that satisfy the nutrient reference is increased whereas the number of times of adding nutrient additives is also increased. Therefore, the number of subgroups is preferably up to 3 per group.

As mentioned above, nutrition-added food that satisfies a specific nutrient reference designed on the basis of public nutrient reference intakes can be conveniently prepared, even for a plurality of diets each having one meal amount on a menu, by adding nutrient additives divided into at least three groups: a group including vitamins having an upper limit of intake, a group including minerals having an upper limit of intake, and a group including vitamins or/and minerals having no upper limit of intake to a single item constituting a diet having one meal amount.

## Claims

1. A method for producing nutrition-added food, comprising adding nutrient additives consisting of at least three groups:
a group including at least one or more types of vitamins having an upper limit of intake in public nutrient reference intakes,
a group including at least one or more types of minerals having an upper limit of intake in public nutrient reference intakes, and
a group including at least one or more types of vitamins or/and minerals having no upper limit of intake in public nutrient reference intakes
to at least one or more types of single items constituting a diet having one meal amount, and
thereby preparing nutrition-added food that satisfies a specific nutrient reference designed on the basis of the public nutrient reference intakes.

2. The method for producing nutrition-added food according to claim 1, wherein the vitamins having an upper limit of intake are vitamin A, vitamin D, vitamin E, niacin, vitamin B6, and folic acid.

3. The method for producing nutrition-added food according to claim 1 and 2, wherein the minerals having an upper limit of intake are calcium, iron, zinc, copper, manganese, phosphorus, iodine, selenium, chromium, and molybdenum.

4. The method for producing nutrition-added food according to any one of claims 1 to 3, wherein the vitamins or the minerals having no condition of intake are vitamin B 1, vitamin B2, vitamin B12, vitamin C, vitamin K, pantothenic acid, biotin, potassium, and magnesium.

5. Nutrition-added food produced by a production method according to claims 1 to 4.

6. A method for providing nutrition-added food in order to provide a customer with a plurality of diets each having one meal amount on a menu as nutrition-added food that satisfies a specific nutrient reference designed on the basis of public nutrient reference intakes, the method comprising:
a deficiency calculation step of calculating a nutrient content of a basic configuration of the nutrition-added food on the basis of nutrient data on each single item constituting a diet having one meal amount selected from the menu, and calculating an amount of a nutrient that falls short of a lower-limit value of the specific nutrient reference;
a nutrient additive addition amount calculation step of calculating addition amounts of nutrient additives consisting of at least three groups: a group including at least one or more types of vitamins having an upper limit of intake in the public nutrient reference intakes, a group including at least one or more types of minerals having an upper limit of intake in the public nutrient reference intakes, and a group including at least one or more types of vitamins or/and minerals having no upper limit of intake in the public nutrient reference intakes, the nutrient additives being added to the diet having one meal amount selected from the menu so as to compensate for the nutrient deficiency calculated in the deficiency calculation step and so as not to exceed an upper-limit value of the specific nutrient reference; and
a nutrition-added food production step of preparing the nutrition-added food by adding the nutrient additives during or after production of at least one or more types of single items constituting the diet having one meal amount selected from the menu on the basis of the addition amounts calculated in the nutrient additive addition amount calculation step, wherein
the nutrition-added food prepared in the nutrition-added food production step is provided directly or after being refrigerated or frozen to the customer.
